# EUROPEAN PATENT SPECIFICATION

(11) **EP 2 772 144 B1**
(45) Date of publication and mention of the grant of the patent: **06.12.2017**
(21) Application number: 12844067.4
(22) Date of filing: 19.10.2012
(51) Int. Cl.: A23K 40/20, A23K 40/30, A23K 10/22, A23K 10/30, A23K 20/147, A23K 20/163, A23K 50/80, A23P 10/30, A23P 20/20, A23P 30/25, A23L 29/212, A23L 29/281, A23L 17/10, A23N 17/00, A22C 7/00, A23L 17/00

(54) **METHOD FOR PRODUCING FEED OR FOOD**
VERFAHREN ZUR HERSTELLUNG EINES FUTTERS ODER LEBENSMITTELS
PROCÉDÉ DE PRODUCTION DE PRODUITS ALIMENTAIRES POUR ANIMAUX OU DE PRODUITS ALIMENTAIRES POUR L'HOMME

(30) Priority: 26.10.2011 JP 2011235325
(43) Date of publication of application: 03.09.2014
(73) Proprietor: Nippon Suisan Kaisha, Ltd., Minato-ku, Tokyo 105-8676 (JP)
(72) Inventor: GOTO, Tsuyoshi, Hachioji-shi Tokyo 1920991 (JP); SHIMIZU, Kazuya, Hachioji-shi Tokyo 1920991 (JP); ITO, Hiromi, Hachioji-shi Tokyo 1920991 (JP); MORITA, Minoru, Hachioji-shi Tokyo 1920991 (JP); TAKAYAMA, Yuji, Hachioji-shi Tokyo 1920991 (JP)
(74) Representative: Grünecker Patent- und Rechtsanwälte PartG mbB
(86) International application number: PCT/JP2012/077138
(87) International publication number: WO 2013/061892

(56) References cited:
- EP-A1- 0 676 149
- EP-A2- 0 832 562
- AU-A1- 2010 228 262
- JP-A- H0 884 565
- JP-A- 2005 204 645
- JP-B2- 2 537 751
- JP-B2- 2 641 033
- JP-B2- 2 691 390
- JP-B2- 2 691 390
- JP-B2- 3 377 964
- JP-B2- 3 415 072
- JP-B2- 3 706 806
- JP-B2- 3 758 901
- JP-B2- H0 646 929
- US-A- 5 882 711
- US-A1- 2011 081 453

## Description

### TECHNICAL FIELD

The present invention relates to a method of producing a two-layered feed or food product having an outer layer and an inner layer. Specifically, the present invention relates to a method suitable for mass-producing a feed or food product in which an inner layer is encrusted with an outer layer, the method involving the use of an extruder provided with a double nozzle.

### BACKGROUND ART

Encrusting machines are widely used to manufacture filled food products such as Japanese *manju* bean paste cakes. Encrusting machines are used to shape and fill outer layers of glutinous rice, wheat, or the like with fillings such as sweet bean paste. Various types of encrusting machines exist in order to allow for the production of breads, confections, and the like that have complicated shapes or require delicate handling; in particular, various modifications have been made to the function of encrusting bean paste with outer layers and to sealing-cutting machines (Patent Documents 1 to 4).

Patent Document 5 discloses a method of combining an extruder and a cutter in order to efficiently produce a multi-layered filled food product from a multi-layered cylindrically shaped food product composed of two or more types of food product material arrayed in concentric circular layers as seen in cross section.

Patent Document 6 discloses a two-layered feed in which an inner layer is entrusted with an outer layer, and teaches that an extruder with a double nozzle can be used to produce the feed.

### BACKGROUND ART DOCUMENTS

### PATENT DOCUMENT

Patent Document 1: Japanese Patent No. 3377964
Patent Document 2: Japanese Patent No. 3415072
Patent Document 3: Japanese Patent No. 3758901
Patent Document 4: Japanese Patent No. 2537751
Patent Document 5: Japanese Patent No. 2641033
Patent Document 6: WO/2010/110326

WO 2010/110326 relates to feed for fish farming including an outer layer and an inner filling; EP 0 832 562 describes an apparatus for shaping food products; US 5,882,711 discloses a method and an appartus for feeding a double-layered food product; JP 2691390 relates to a half-open packaged food; US 2011/0081453 relates to a method of extruding edible compositions in the form of three dimensional products; EP 0 676 149 describes a method for cutting a bar-shaped food.

### DISCLOSURE OF THE INVENTION

### Problems that the Invention is to Solve

Various types of encrusting machines exist in order to produce food products having a two-layered structure comprising an outer layer and an inner layer; however, conventional methods involving using an encrusting machine to encrust a filling and performing heating are unrealistic for producing a two-layered fish feed such as that disclosed in Patent Document 5 due to the large production volume involved and the fact that, although the product, being a feed, does not need as delicate a finish as a food product, it must be produced cheaply and in mass quantities.

Methods involving shaping an outer layer and an inner layer using an encrusting machine, followed by heating the shaped products, are not suited to the mass production of filled feeds or food products due to involving a two-step process and requiring a laborious step of transporting the unheated shaped product to the heating step in a manner so as not to ruin the shape thereof. An object of the present invention is to provide a method suitable for the mass production of a filled feed or food product.

### Means for Solving the Problems

The inventors attempted to efficiently produce a two-layered feed using encrusting machines widely used in fields such as bread or confections, but none of these was suited for inexpensive, efficient mass production. One major problem was the need to separately heat the outer layer after being shaped by the encrusting machine, leading to inefficiencies in the transportation and storage of the shaped product. The inventors therefore investigated performing shaping and heating in a single step, rather than as two separate processes. The inventors discovered that a feed featuring an inner layer completely encrusted with an outer layer could be produced by shaping into a two-layered structure using an extruder provided with a double nozzle, followed by filling and cutting using a shutter mechanism while the temperature is still high, thereby arriving at the present invention.

The present invention is a method of producing a feed or food product according to the following (1) to (8)(7).
(1) A method of producing a feed or food product in which an inner layer is encrusted with a gelled outer layer composition, the method comprising the steps of: preparing an outer layer composition feedstock by adding a secondary feedstock to a protein feedstock and/or a starch feedstock, wherein the protein feedstock and/or starch feedstock that forms a gel upon heating and the secondary feedstock is added at levels that have no adverse effect on the gelling of the outer layer, and then mixing by stirring, and preparing an inner layer composition that is encrusted with the outer layer composition; extrusion molding with an extruder provided with a double nozzle so as to cover a surface of the inner layer composition while simultaneously gelling the outer layer composition feedstock by heat treatment; and cutting a continuously extruded cylindrically shaped product to a fixed length with a shutter mechanism while simultaneously encrusting a cut surface with the gelled outer layer composition to form a finished product in which the inner layer is completely covered by the outer layer, wherein the shutter is closed before heated gel coming out of the extruder cools, and wherein the shutter mechanism is crankshaft-driven, the rotational motion of the crankshaft allows the cutting speed and vertical speed of the shutter device to be increased, and the shutter sealing/cutting speed is 120 to 140 strokes/minute or faster.
(2) The method of producing a feed or food product according to (1), wherein the shutter mechanism is a shutter device provided with a plurality of open-and-closable shutter pieces.
(3) The method of producing a feed or food product according to (2), wherein there is a combination of at least six shutter pieces.
(4) The method of producing a feed or food product according to any one of (1) to (3), wherein the shutter is manufactured from a heat-resistant material.
(5) The method of producing a feed or food product according to any one of (1) to (4), wherein the protein feedstock that forms a gel upon heating is one selected from among surimi, ground fish meat, krill, gelatin, collagen, gluten, egg albumen, and soy protein, or a combination of two or more thereof.
(6) The method of producing a feed or food product according to any one of (1) to (4), wherein the starch feedstock that forms a gel upon heating is one selected from among tapioca starch, wheat starch, potato starch, corn starch, bean starch, waxy corn starch, and processed starches thereof, or a combination of two or more thereof.
(7) The method of producing a feed or food product according to any one of (1) to (6), wherein the heating temperature of the extruder is from 60 to 110°C.

### Advantage of the Invention

In accordance with the production method according to the present invention, it is possible to mass-produce, at high speed, a double-layered feed or food product in which an inner layer is encrusted with an outer layer.

### BRIEF DESCRIPTION OF THE DRAWINGS

FIG. 1 is a schematic illustration of one embodiment of the method according to the present invention.
FIG. 2 is a schematic illustration of one embodiment of a shutter mechanism used in the present invention.
FIG. 3 is a schematic illustration of one embodiment of a sliding shutter used in the present invention.
FIG. 4 is a schematic illustration of one embodiment of a sliding shutter used in the present invention.

### DETAILED DESCRIPTION OF PREFERRED EMBODIMENTS

The present invention is a method of producing a filled feed or food product in which an inner filling is covered with an outer skin. The method involves using an extruder provided with a double nozzle to simultaneously heat an outer layer via extrusion cooking and coat an inner layer with the outer layer, and cutting an extruded cylindrically shaped product to a fixed length using a rising and descending shutter mechanism in synch with the speed at which the shaped product is extruded while simultaneously encrusting the cut surface with the outer layer. There is no need for a separate process of heating the outer layer after shaping, as in the case of production using an encrusting machine, allowing a finished product to be produced from raw outer layer feedstock in a single step.

The extruder used in the present invention may be a single-screw or a twin-screw extruder as long as it possesses an extrusion function and a heating function. The outer layer composition feedstock is fed into the extruder and kneaded, and the outer layer composition feedstock is heated to gelling temperature and extruded. A nozzle for supplying the inner layer composition into the outer layer composition is disposed near an outlet of the extruder, and the inner layer composition is extruded into the center of the outer layer, which is extruded in a cylindrical shape, to create a two-layered structure.

The heating temperature of the extruder will vary according to the outer layer feedstock; the feedstock is gelled by being heated to from 60 to 110°C, preferably from 60 to 100°C, especially preferably from 70 to 90°C. If swelling is permissible, the product can also be produced at a temperature greater than or equal to 110°C. If it is not desirable for the extruded outer layer to swell, the outer layer composition feedstock is preferably degassed in advance.

The two-layered shaped product continuously extruded from the extruder is dispensed vertically downward into the shutter mechanism.

Various types of shutter mechanisms used in encrusting machines can be used for the shutter mechanism. In order to reliably encrust the cut surface with the outer layer, a sliding shutter having a structure in which a uniform opening shape is maintained by a plurality of shutter pieces while growing gradually smaller and closing in the middle is preferable. As the shutter draws in the heated gel of the outer layer of the shaped product that is being extruded from the extruder, the shutter begins to pinch shut, the opening narrows, and the outer layer of the shaped product is finally cut off in the center. Closing the shutter before the heated gel coming out of the extruder cools allows for reliable closing.

Regarding the specific shape of the shutter, examples of shutters include those disclosed in Japanese patents 3016246, 3377964, and 3415072 and Japanese Utility Model H05-025432 granted to Rheon Automatic Machinery Co., Ltd., and Japanese Patent 2641033 granted to Kobird Co., Ltd. In particular, a combination of at least six shutter pieces that maintain an opening shape in a regular polygonal shape when opening and closing is preferable, as this will allow the outer layer to be uniformly drawn together.

The cross-sectional thickness of the shutter pieces is preferably at least half the radius of the final product in order to reliably cover the cut surface with the outer layer. For example, if the final product has a diameter of 26 mm, a shutter piece cross-sectional thickness of about 15 mm is appropriate, or a thickness of about 10 mm is appropriate if the final product has a diameter of 18 mm.

However, shutters used in conventional encrusting machines cannot be applied to the extruder without modification. In order to match the speed of the extruder, the open/close speed and vertical motion speed of the shutter must be increased. In addition, because of the high speed of the operation and the fact that the heated gel being expelled from the extruder is at a temperature of 60 to 100°C, the shutter is exposed to heat, and expands. Moreover, if a hard material such as fish meal is included in the raw material for the feed, the surfaces of the shutter pieces will be abraded and exhibit severe wear. In order to solve this problem, the shutter must be made of a heat-resistant, slidable, strong material. Conventional Newlight resins have low heat resistance (60°C) and are soft. In the present invention, it is preferable to use a PEEK resin or a material having comparable or better properties. The shutter may also be cooled as necessary. Specifically, a method such as blowing compressed air or cooled air can be used.

Cam-driven mechanisms exhibit durability problems at high-speed operation, preventing speed from being increased over a certain level. The present invention is crankshaft-driven rather than cam-driven. The rotational motion of the crankshaft drives the invention, allowing the cutting speed and vertical speed of the shutter device to be increased. Speed can also be adjusted by altering the vertical stroke speed. This drive format allows for a shutter sealing/cutting speed of 120 to 140 strokes/minute or faster.

The finished product, after being encrusted and cut by the shutter mechanism, is a cylindrically shaped product of a constant length in which the inner layer is completely covered by the outer layer, and can be used as a feed or food product without further modification.

In the present invention, it is vital that a feedstock containing a protein feedstock and/or a starch feedstock that forms a gel upon heating be used for the outer layer constituting the outer skin. Using a raw material that gels upon heating and has a certain level of resiliency, extensibility, and adhesiveness will allow for reliable encrusting of the inner layer.

In the present invention, a heat-induced gel means a gel able to be formed by heating a protein to 60°C or higher or by heating a protein to 60°C or higher and then cooling, or a gel able to be formed by adding water to a starch and then heating to 60°C or higher so as to cause gelatinization.

The composition of the outer layer may be any which has the above-mentioned physical properties and which covers the inner layer composition, but it was found that the physical properties of a gel able to be formed by heating a protein or a gel able to be formed by heating a starch is suitable for use in the present invention from the perspectives of softness, extensibility. For example, a protein having gel-forming properties is preferred, such as fish meat, surimi, krill, gluten, collagen, soy bean protein, enzymatically degraded soy bean protein, gelatin, egg albumen, or a combination of two or more types thereof. Preferred starches include tapioca starch, wheat starch, potato starch, corn starch, bean starch, waxy corn starch, or a processed product of these starches. It is possible to use food ingredients that contain large quantities of these proteins and/or starches. By heating an outer layer composition that contains these proteins and/or starches, the gel is immobilized and the inner layer composition has softness, holding power, and a certain degree of strength.

For example, if surimi is used as the outer layer composition, this can be produced using a method for producing a fish paste product such as kamaboko (semicylindrical processed fish paste). Specifically, 2% or more of common salt is added to the surimi, which is left to stand for 10 minutes or longer at a temperature of 10°C or higher, and preferably 30°C to 40°C, and then heated for 10 minutes or longer at a temperature of 80°C to 90°C. Alternatively, if egg albumen is used, egg albumen, starch, fish meal, and water are blended at a weight ratio of, for example, 1:1:2:6 and then heated, thereby producing a composition having the desired physical properties.

It is allowable to add a variety of secondary feedstock to the outer layer at levels that have no adverse effect on the gelling of the outer layer.

In case of feed, it is allowable to add fish meal and oil to the outer layer at levels that have no adverse effect on the gelling of the outer layer. Depending on the type of gel used, it is possible to add up to 60 wt.% of fish meal and up to 30 wt.% of oil to the outer layer. It is preferable to add approximately 20 to 30 wt.% of fish meal and 5 to 10 wt.% of fat.

In order to further improve the quality of the gel in the outer layer, it is possible to add additives that are used as improving agents in fish paste products. It is possible to add a starch, a polysaccharide thickener, a soy protein isolate, baking soda, a polyphosphate, egg albumen, transglutaminase, a protease inhibitor. In particular, in order to enhance the strength of the gel, a thickening agent such as agar, gellan gum, pullulan, a starch, mannan, carrageenan, xanthan gum, locust bean gum, curdlan, pectin, alginic acid or a salt thereof, gum arabic, chitosan, dextrin, or an edible water-soluble cellulose can be blended in the gel as appropriate.

As another preferred aspect of the outer layer of the present invention, it was found that a heat-induced gel having a starch as a primary component has excellent resiliency and softness. A gel obtained by adding water to a starch, kneading, and then heating exhibits elasticity, softness, and extensibility. In particular, a variety of processed starches have individual characteristics, and by using two or more types thereof, it is possible to obtain an outer layer having properties such as resiliency, softness, and extensibility. For example, it is possible to combine different types of processed starches, such as a combination of an etherified starch and a phosphoric acid-crosslinked starch. It is possible to obtain an even stronger gel by adding a protein such as gluten or soy bean protein to a starch. It is also possible to use, for example, gluten-containing wheat flour instead of gluten. Other secondary raw materials able to be added include cereal flours such as wheat flour, proteins such as soy bean protein, gluten, or egg albumen, sugars and sugar alcohols such as table sugar or starch syrup, thickening agents such as carrageenan, agar, gellan gum, pullulan, mannan, xanthan gum, locust bean gum, curdlan, pectin, alginic acid or a salt thereof, gum arabic, chitosan, dextrin, or an edible water-soluble cellulose, and salts such as phosphates. For example, by adding wheat flour to a starch, it is possible to impart strength to the outer layer. In addition, by adding a certain quantity of a protein, it is possible to suppress surface stickiness following heating.

The starch used in the present invention can be tapioca starch, wheat starch, potato starch, corn starch, bean starch, and processed starches obtained by subjecting these starches to etherification, acetylation, acetyl crosslinking, ether crosslinking, phosphoric acid-crosslinking or gelatinized hydroxypropylphosphoric acid-crosslinking are particularly preferred. The feed of the present invention is produced by adding other secondary raw materials such as proteins to these starches, adding water thereto and kneading, covering the inner layer by means of an encrusting machine, and then heating. Alternatively, the feed of the present invention can be produced by feeding the outer layer raw materials and the inner layer raw materials into an extruder having a double nozzle, and blending and heat treating the outer layer raw materials while simultaneously extruding so as to cover the inner layer with the outer layer. The quantity of water added to the raw material such as a starch should be a quantity able to be handled by the encrusting machine or extruder, but approximately 30 to 50 wt.% is appropriate. The heating temperature should be not lower than the temperature at which the starch or added protein gels, and the product temperature should be 60 to 110°C, preferably 70 to 100°C, and more preferably approximately 80 to 90°C. Fish oils are easily oxidized, and high temperatures should therefore be avoided.

Moisture in the outer layer of the present invention, which covers an inner layer of a heat-induced gel of a starch, is approximately 25 to 50 wt.%. When storing for a long period of time in this state, it is possible to store the feed in a refrigerated or frozen state. In addition, by further drying this feed to reduce the moisture to 10 to 20 wt.%, it is possible to obtain a feed having good shelf life. By drying the outer layer and also adding additives thereto so as to reduce water activity, it is possible to produce a feed able to be stored for a long period of time at room temperature. The water content is preferably 10 to 20 wt.% and the water activity is preferably 0.8 or lower, and more preferably 0.6 or lower.

Various patterns have been considered for formulating the composition of a starch-containing outer layer. In case of feed, the nutrients and calories required in a feed differ according to the species and growth stage of fish. As the quantity of fish meal or fish oil increases, the outer layer needs to be precisely formulated, but in cases where the quantity of fish meal or fish oil is low, the outer layer can be formulated more freely. In terms of dry product, at least 20 to 80 wt.% of starch is incorporated. In the case of an outer layer in which 25 to 50 wt.% (in terms of dry product) of fish meal is added, it is preferable to add, in terms of dry product, 20 to 65 wt.% of starch, 5 to 20 wt.% of wheat flour, and a total of 5 to 15 wt.% of proteins, oils, thickening agents, salts. It is preferable to add approximately 1 to 5 wt.% of fish oil, 1 to 2 wt.% of phosphate salts, 1 to 5 wt.% of protein, and 1 to 5 wt.% of thickening agent.

When used as a secondary raw material, wheat flour is preferably strong flour having a high gluten content, but may also be weak flour.

In order to further improve the quality of the outer layer, it is possible to add additives that are used as improving agents in starch-based foods.

In case of feed, the composition of the inner layer contains mainly fish meal and oils, but it is also possible to add other nutrient ingredients known as nutrient ingredients for fish farming, such as vitamins and minerals. In addition, although the inner layer is covered by the outer layer, because it is not desirable for fish meal and liquid oils to leak from the inner layer, it is possible to stabilize the inner layer by blending a polysaccharide or hydrogenated oil or by emulsification. In particular, when producing in a machine, it is preferable for the physical properties of the inner composition to encompass fluidity and physical properties that are appropriate for the machining. Examples of polysaccharides (fat-absorbing agents) include Oil Q (produced by Nippon Starch Chemical Co., Ltd.), and examples of hydrogenated oils include Unishort K (produced by Fuji Oil Co., Ltd.) and New Fujipro SEH (produced by Fuji Oil Co., Ltd.).

Furthermore, raw materials for conventional artificial feeds for farmed fish can be added to the composition of the inner layer. For example, proteins such as live fish, squid meal, krill meal, soy bean lees, and corn gluten meal, oils and fats such as krill oil, whale oil, soy bean oil, corn oil, rape seed oil, and hydrogenated oils, starch-based materials such as starches, wheat flour, rice flour, tapioca powder, and corn powder, alginic acid and salts thereof, polysaccharides such as sodium carboxymethyl cellulose (CMC), guar gum, dextrins, chitosan, curdlan, pectin, carrageenan, mannan, gellan gum, gum arabic, and edible water-soluble celluloses, vitamins, minerals.

The composition of the inner layer contains 20 to 70 mass % of oils and, in cases where the feed is fed to large farmed fish, the oil content is preferably 30 mass % or higher, more preferably 35 mass % or higher, and most preferably 45 mass % or higher. A high fat content achieves excellent effects in terms of growth and growth efficiency of farmed fish, but if the oil content exceeds 70 mass %, the content of other blending components must fall, meaning that it is difficult to obtain balanced nutrition. Fish oils and other plant-based oils are highly fluid and may be used without further modification, but it is preferable to reduce the fluidity by using oil-absorbing polysaccharides such as Vitacel WF200, Vitacel WF600, or Vitacel WF600/30 (all produced by J. Rettenmaier & Söhne GmbH + Co. KG), Oil Q No. 50 or Oil Q-S (produced by Nippon Starch Chemical Co., Ltd.), or a dextrin such as Pine Flow (produced by Matsutani Chemical Industry Co., Ltd.), oil-absorbing proteins such as fermented soy beans and isoflavones, or hydrogenated oils obtained by hydrogenating oils and fats such as soy bean oil, rape seed oil, or palm oil. Alternatively, it is possible to reduce the fluidity by emulsifying fish oils. However, in view of the digestive properties of fish, the content of these components that reduce fluidity is preferably 10 mass % or lower, and more preferably 5 mass % or lower, of the composition of the inner layer. Fish oils are most preferred as the oil, but it is also possible to replace part of the fish oils with other plant-based oils.

The fish meal, which is an essential component of the inner layer, can be a variety of fish meals or a powder of crustaceans such as krill, which are commonly used as raw materials for feeds for fish farming. The fish meal content is 30 to 70 mass %, preferably 30 mass % or higher, more preferably 35 mass % or higher, and most preferably 45 mass % or higher. It is preferable to add an excipient having binding properties, such as a polysaccharide, a hydrogenated oil, or an emulsifier, to the inner layer composition in order to prevent the inner layer composition from disintegrating.

In view of the shelf life of the feed of the present invention, the water activity thereof may be adjusted. It is possible to adjust the water activity by adjusting the composition of the inner layer or outer layer. For example, it is possible to reduce the water activity of the composition of the inner layer by adjusting the quantity of water added thereto. In addition, it is possible to adjust the water activity of the composition by adding a water activity-adjusting agent, such as a salt (common salt, sodium malate, sodium lactate), a sugar (table sugar, lactose, maltose, sorbitol), a sugar alcohol, an amino acid, a nucleic acid related compound, an organic acid, an alcohol, propylene glycol, glycerin, a starch, or a protein.

The foregoing detailed description has focused primarily on feeds, but the components of the outer layer can be planned according to similar criteria in the case of a food product as well. As there is no need to consider nutritional efficiency in the case of a food product, as opposed to a feed, there is a high degree of freedom in designing the product according to taste or texture. An outer layer composition containing protein or starch can be used to encrust various food ingredients such as bean paste, chocolate, and cream, as well as vegetables, fruits, meat, fish, poultry, eggs, and cereals. Any material may be used for the composition of the inner layer as long as it has physical properties allowing it to be dispensed from the nozzle of the extruder. The inner layer may be processed or unprocessed, and may be a single ingredient or a prepared food product.

The present invention will now be described in greater detail through the use of working examples.

### Working Example 1

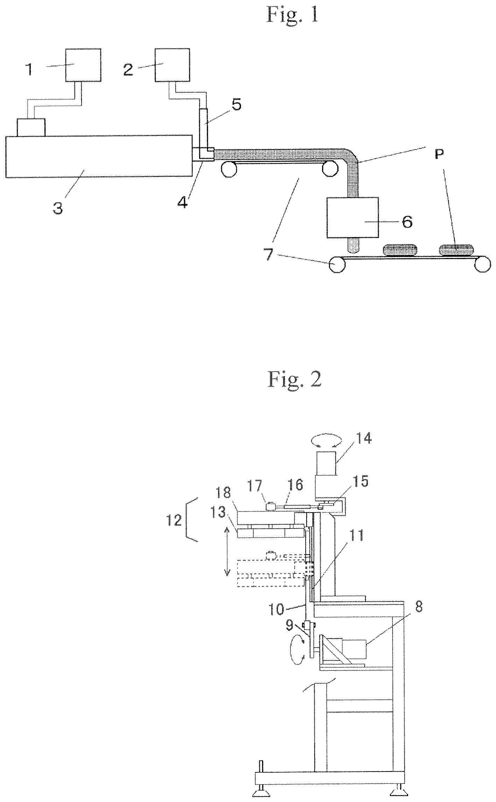

A production apparatus configured as shown in FIG. 1 was built in order to implement the production method according to the present invention. An outer layer composition feedstock feeder device 1 mixes an outer layer composition feedstock and pumps it to an extruder 3. An inner layer composition feeder device 2 pumps a separately mixed and prepared inner layer composition to an extruder outlet 4 via a nozzle 5. After being kneaded within the extruder 3, the outer layer composition feedstock is heated to form a heated gel. The outer layer is extruded from the outlet in a cylindrical shape, the interior thereof is filled with the inner layer composition being injected via the nozzle 5, and the whole is dispensed in a two-layered cylindrical shape. The dispensed two-layered cylindrical product is carried by a conveyor and inserted vertically downwards into a shutter mechanism 6. The product is sealed and cut to a fixed length by the shutter mechanism 6 to form a two-layered shaped product.

In order to allow for high-speed production, a completely intermeshing co-rotational twin-screw extruder (manufactured by Bühler) having an output capacity of 1 t/h was used.

A shutter mechanism having the configuration shown in FIG. 2 was used as a shutter mechanism capable of sealing and cutting in synch with the output speed of the extruder. The shutter device moves vertically in synch with the output speed of the extruder. Specifically, a motor 8 of a controlled rotational speed rotates a crankshaft 9, and a coupling rod 10 converts the rotational movement of the crankshaft 9 to vertical movement, which raises and lowers a shutter device 12 coupled to a linear guide 11.

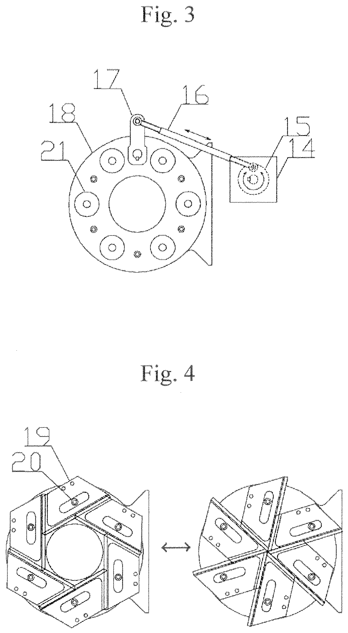

The shutter is a sliding shutter 13, and a motor 14 of a controlled rotational speed rotates a crankshaft 15, a coupling rod 16 converts the rotational movement of the crankshaft 15 to forward-and-backward movement, moving a drive lever 17 coupled to the coupling rod 16 forwards and backwards, and gears within a housing 18 convert the forward-and-backward movement of the drive lever 17 to rotational movement, opening/closing the shutter. FIG. 3 is a view of this opening-closing mechanism from above. The mechanism was driven by the crankshaft turned by the motor 14, rather than by a cam mechanism, allowing the strength of the device to be improved and speed to be increased. A PEEK resin was used as a shutter piece material capable of withstanding heat-induced expansion and abrasion from high-speed operation. Resins lacking heat resistance were incapable of withstanding high-speed operation.

A shutter mechanism having a configuration similar to that of a sealing-cutting shutter from Rheon Automatic Machinery Co., Ltd. (Japanese Patent No. 3377964) was used. As shown in FIG. 4, six shutter pieces 19 are fixed in place by a sliding pin 20; the left and right views show an open state and a closed state, respectively.

### Working Example 2

Using the production apparatus from working example 1, a fish feed of units having a diameter of 3 cm and a length of 15 cm was produced.

An outer layer composition raw material was prepared by blending 18 wt% tapioca starch (etherified starch), 4 wt% waxy starch (pregelatinized hydroxypropylphosphoric acid-crosslinked starch), 1 wt% bean starch (acetylated starch), 3 wt% isolated soy bean protein powder (New Fujipro SEH, produced by Fuji Oil Co., Ltd.), 3 wt% krill meal, 3 wt% wheat flour, 1 wt% gluten, 0.5 wt% carrageenan, 0.5 wt% disodium hydrogen phosphate, 3 wt% egg albumen, 20 wt% fish meal, 3 wt% starch syrup, 2 wt% fish oil, and 40 wt% water in a silent cutter.

An inner layer composition was prepared by blending 60 wt% fish meal, 36 wt% fish oil, 1.2 wt% hydrogenated oil, 3 wt% krill meal, 2.5 wt% vitamins, 1 wt% minerals, 1.2 wt% calcium phosphate, and 0.1 wt% of an organic acid in a mixer.

These were dispensed from the outer layer composition feedstock feeder device 1 and the inner layer composition feeder device 2 of the production apparatus of working example 1, and mixed and heated by an extruder at a screw speed of 450 rpm, an output temperature of 90°C, and an outlet pressure of 45 bar. The apparatus of working example 1 is capable of production at a rate of 145 units/minute, with the cut surface being encrusted with the outer layer and there being no leakage of the inner layer contents.

### INDUSTRIAL APPLICABILITY

The present invention can provide a method of mass-producing a feed, food product having a two-layered structure comprising an outer layer and an inner layer at high speed.

### Description of Reference Numerals

- P: Finished product
- 1: Outer layer composition feedstock feeder device
- 2: Inner layer composition feeder device
- 3: Extruder having heating function
- 4: Outlet
- 5: Nozzle
- 6: Shutter mechanism
- 7: Conveyor
- 8: Motor
- 9: Crankshaft
- 10: Coupling rod
- 11: Linear guide
- 12: Shutter device
- 13: Sliding shutter
- 14: Motor
- 15: Crankshaft
- 16: Coupling rod
- 17: Drive lever
- 18: Housing
- 19: Shutter piece
- 20: Sliding pin
- 21: Knob bolt

## Claims

1. A method of producing a feed or food product in which an inner layer is encrusted with a gelled outer layer composition, the method comprising the steps of:
preparing an outer layer composition feedstock by adding a secondary feedstock to a protein feedstock and/or a starch feedstock, wherein the protein feedstock and/or starch feedstock forms a gel upon heating and the secondary feedstock is added at levels that have no adverse effect on the gelling of the outer layer, and then mixing by stirring, and preparing an inner layer composition that is encrusted with the outer layer composition;
extrusion molding with an extruder provided with a double nozzle so as to cover a surface of the inner layer composition while simultaneously gelling the outer layer composition feedstock by heat treatment; and
cutting a continuously extruded cylindrically shaped product to a fixed length with a shutter mechanism while simultaneously encrusting a cut surface with the gelled outer layer composition to form a finished product in which the inner layer is completely covered by the outer layer, wherein the shutter is closed before heated gel coming out of the extruder cools, and wherein the shutter mechanism is crankshaft-driven, the rotational motion of the crankshaft allows the cutting speed and vertical speed of the shutter device to be increased, and the shutter sealing/cutting speed is 120 to 140 strokes/minute or faster.

2. The method of producing a feed or food product according to claim 1, wherein the shutter mechanism is a shutter device provided with a plurality of open-and-closable shutter pieces.

3. The method of producing a feed or food product according to claim 2, wherein there is a combination of at least six shutter pieces.

4. The method of producing a feed or food product according to any one of claims 1 to 3, wherein a shutter is manufactured from a heat-resistant material.

5. The method of producing a feed or food product according to any one of claims 1 to 4, wherein the protein feedstock that forms a gel upon heating is one selected from among surimi, ground fish meat, krill, gelatin, collagen, gluten, egg albumen, and soy protein, or a combination of two or more thereof.

6. The method of producing a feed or food product according to any one of claims 1 to 4, wherein the starch feedstock that forms a gel upon heating is one selected from among tapioca starch, wheat starch, potato starch, corn starch, bean starch, waxy corn starch, and processed starches thereof, or a combination of two or more thereof.

7. The method of producing a feed or food product according to any one of claims 1 to 6, wherein the heating temperature of the extruder is from 60 to 110°C.

## Patentansprüche

1. Verfahren zur Herstellung eines Futters oder Lebensmittelproduktes, bei dem eine innere Schicht mit einer gelierten äußeren Schichtzusammensetzung überkrustet ist, wobei das Verfahren folgende Schritte umfasst:
Zubereiten eines Ausgangsstoffes für die äußere Schichtzusammensetzung durch Hinzufügen eines sekundären Ausgangsstoffes zu einem Protein-Ausgangsstoff und/oder einem Stärke-Ausgangsstoff, wobei der Protein-Ausgangsstoff und/oder der Stärke-Ausgangsstoff bei Erwärmen ein Gel bildet und der sekundäre Ausgangsstoff bei Pegeln hinzugefügt wird, die keinen negativen Effekt auf die Gelierung der äußeren Schicht haben, und anschließend Mischen durch Umrühren, und Vorbereiten einer inneren Schichtzusammensetzung, die mit der äußeren Schichtzusammensetzung überkrustet ist;
Strangpressen mit einer Strangpresse, die mit einer doppelten Düse versehen ist, um eine Oberfläche der inneren Schichtzusammensetzung zu bedecken und gleichzeitig den Ausgangsstoff für die äußere Schichtzusammensetzung durch Wärmebehandlung zu gelieren; und
Abschneiden eines kontinuierlich stranggepressten zylinderförmigen Produktes auf eine feste Länge mit einem Verschlussmechanismus bei gleichzeitigem Überkrusten einer Schnittfläche mit der gelierten äußeren Schichtzusammensetzung, um ein Endprodukt herzustellen, bei dem die innere Schicht vollständig mit der äußeren Schicht bedeckt ist, wobei der Verschluss geschlossen wird, bevor das erwärmte Gel, das aus der Strangpresse herauskommt, abkühlt, und wobei der Verschlussmechanismus kurbelwellengetrieben ist, die Drehbewegung der Kurbelwelle eine Erhöhung der Schnittgeschwindigkeit und der vertikalen Geschwindigkeit der Verschlussvorrichtung zulässt, und die Abdicht-/Schnittgeschwindigkeit des Verschlusses 120 bis 140 Hübe/Minute oder schneller ist.

2. Verfahren zur Herstellung eines Futters oder Lebensmittelproduktes nach Anspruch 1, wobei der Verschlussmechanismus eine Verschlussvorrichtung ist, die mit einer Vielzahl von Verschlussstücken versehen ist, die geöffnet und geschlossen werden können.

3. Verfahren zur Herstellung eines Futters oder Lebensmittelproduktes nach Anspruch 2, wobei eine Kombination aus mindestens sechs Verschlussstücken vorhanden ist.

4. Verfahren zur Herstellung eines Futters oder Lebensmittelproduktes nach einem der Ansprüche 1 bis 3, wobei ein Verschluss aus einem hitzebeständigen Material hergestellt wird.

5. Verfahren zur Herstellung eines Futters oder Lebensmittelproduktes nach einem der Ansprüche 1 bis 4, wobei der Protein-Ausgangsstoff, der bei Erwärmung ein Gel bildet, einer ist, der aus Surimi, gemahlenem Fischfleisch, Krill, Gelatine, Kollagen, Gluten, Eiweiß und Sojaprotein oder einer Kombination aus zwei oder mehreren davon gewählt wird.

6. Verfahren zur Herstellung eines Futters oder Lebensmittelproduktes nach einem der Ansprüche 1 bis 4, wobei der Stärke-Ausgangsstoff, der bei Erwärmung ein Gel bildet, einer ist, der aus Tapiokastärke, Weizenstärke, Kartoffelstärke, Maisstärke, Bohnenstärke, Wachsmaisstärke und verarbeiteten Stärken daraus, oder einer Kombination aus zwei oder mehreren davon gewählt wird.

7. Verfahren zur Herstellung eines Futters oder Lebensmittelproduktes nach einem der Ansprüche 1 bis 6, wobei die Erwärmungstemperatur der Strangpresse 60 bis 110 °C beträgt.

## Revendications

1. Procédé de production d'un produit destiné à l'alimentation animale ou l'alimentation humaine dans lequel une couche interne est enrobée d'une composition de couche externe gélifiée, le procédé comprenant les étapes de :
préparation d'une charge d'alimentation de composition de couche externe par l'addition d'une charge d'alimentation secondaire au niveau d'une charge d'alimentation de protéine et/ou une charge d'alimentation d'amidon, la charge d'alimentation de protéine et/ou la charge d'alimentation d'amidon forment un gel à l'issue du chauffage et la charge d'alimentation secondaire est ajoutée à des niveaux qui ne présentent pas d'effet défavorable sur la gélification de la couche externe, et ensuite le mélange par agitation, et la préparation d'une composition de couche interne qui est enrobée de la composition de couche externe ;
moulage par extrusion avec une extrudeuse pourvue d'une double buse afin de couvrir une surface de la composition de couche interne tout en gélifiant simultanément la charge d'alimentation de composition de couche externe par traitement thermique ; et
découpe d'un produit mis en forme de manière cylindrique extrudé de manière continue à une longueur fixe avec un mécanisme d'obturation tout en enrobant simultanément une surface coupée de la composition de couche externe gélifiée pour former un produit fini dans lequel la couche interne est entièrement recouverte de la couche externe, où l'obturateur est fermé avant que le gel chauffé sortant de l'extrudeuse refroidisse, et où le mécanisme d'obturation est entraîné par un vilebrequin, le mouvement de rotation du vilebrequin permettant à la vitesse de coupe et à la vitesse verticale du dispositif d'obturation d'être accrues, et la vitesse d'étanchéité de l'obturateur/de découpe étant de 120 à 140 coups/minute ou plus rapide.

2. Procédé de production d'un produit destiné à l'alimentation animale ou l'alimentation humaine selon la revendication 1, dans lequel le mécanisme d'obturation est un dispositif d'obturation pourvu d'une pluralité d'éléments obturateurs pouvant être ouverts et fermés.

3. Procédé de production d'un produit destiné à l'alimentation animale ou l'alimentation humaine selon la revendication 2, dans lequel existe une combinaison d'au moins six éléments obturateurs.

4. Procédé de production d'un produit destiné à l'alimentation animale ou l'alimentation humaine selon l'une quelconque des revendications 1 à 3, dans lequel un obturateur est fabriqué à partir d'un matériau thermiquement résistant.

5. Procédé de production d'un produit destiné à l'alimentation animale ou l'alimentation humaine selon l'une quelconque des revendications 1 à 4, dans lequel la charge d'alimentation de protéine qui forme un gel à l'issue du chauffage est l'une sélectionnée parmi le surimi, la chair de poisson broyée, le krill, la gélatine, le collagène, le gluten, l'albumine d'oeuf, et la protéine de soja, ou une combinaison de deux ou plusieurs d'entre eux.

6. Procédé de production d'un produit destiné à l'alimentation animale ou l'alimentation humaine selon l'une quelconque des revendications 1 à 4, dans lequel la charge d'alimentation d'amidon qui forme un gel à l'issue du chauffage est l'une sélectionnée parmi l'amidon de tapioca, l'amidon de blé, l'amidon de pomme de terre, l'amidon de maïs, l'amidon de haricot, l'amidon de maïs cireux, et les amidons transformés de ceux-ci, ou une combinaison de deux ou plusieurs de ceux-ci.

7. Procédé de production d'un produit destiné à l'alimentation animale ou l'alimentation humaine selon l'une quelconque des revendications 1 à 6, dans lequel la température de chauffage de l'extrudeuse est de 60 à 110°C.
